(19) Europäisches Patentamt
European Patent Office
Office européen des brevets

(11) **EP 2 620 086 B1**

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(51) Int Cl.:
*A47L 9/28* (2006.01)  *G05D 16/20* (2006.01)

(21) Anmeldenummer: **12401010.9**

(22) Anmeldetag: **27.01.2012**

(54) **Verfahren zum Einstellen der Leistung eines Staubsaugergebläses**

Method for setting the power of a vacuum cleaner fan

Procédé de réglage de la puissance d'un souffle d'aspirateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.07.2013 Patentblatt 2013/31**

(73) Patentinhaber: **Miele & Cie. KG**
**33332 Gütersloh (DE)**

(72) Erfinder:
• **Braun, Otto**
**33739 Bielefeld (DE)**
• **Bruns, Wilfried**
**33415 Verl (DE)**

(56) Entgegenhaltungen:
**EP-A1- 0 379 680     WO-A1-2009/103585**
**DE-A1- 4 433 181     US-A- 5 722 109**

**Beschreibung**

Die Erfindung betrifft ein Verfahren zum Einstellen der Leistung eines Staubsaugergebläses, bei dem eine elektronische Regeleinrichtung die Gebläseleistung mittels einer geeigneten Stellgröße in Abhängigkeit eines vom Gebläse erzeugten Unterdrucks als Regelgröße einstellt, wobei der Unterdruck mittels eines Unterdruckschalters mit einem einzigen Schaltpunkt ermittelt wird, und wobei die Regeleinrichtung in einer ersten Betriebsphase nach dem Einschalten des Gebläses oder nach einer Änderung des Unterdrucks die Stellgröße schnell von einem Anfangswert bis zu einem Schaltwechsel des Unterdruckschalters ändert und in einer zweiten Betriebsphase die Stellgröße langsam um den Schaltpunkt herum ändert.

Hochwertige Staubsauger besitzen eine automatische Regelung der Saugleistung. Hierdurch soll einerseits die zum Bewegen der Bodendüse notwendigen Schiebekräfte gering gehalten und andererseits die Leistung an den zu reinigenden Bodenbelag angepasst werden. Dabei erfolgt die Regelung in Abhängigkeit von dem gemessenen Unterdruck als Regelgröße, der an einer charakteristischen Stelle wie der Bodendüse oder dem Saugstutzen gemessen wird. Zur Erfassung des Unterdrucks kommen als Sensoren Unterdruckschalter mit analoger Ausgabe, Unterdruckschalter mit zwei Schaltpunkten oder Unterdruckschalter mit einem einzigen Schaltpunkt zum Einsatz. Als Stellgröße zur Änderung der Leistung wird beispielsweise eine Phasenanschnittsteuerung verwendet. Die Auswertung der Sensorik und die Einstellung der Stellgröße sowie gegebenenfalls weitere Messungen erfolgen üblicherweise mit einem Mikrocontroller, im Folgenden allgemein als elektronische Regeleinrichtung bezeichnet.

Unterdruckschalter mit analoger Ausgabe besitzen den Vorteil, dass sie eine exakte Messung der Sollwertabweichung zu jeder Zeit ermöglichen. Dementsprechend haben sie das beste Regelverhalten, sie sind schnell und genau. Dieser Vorteil wird durch einen sehr hohen Bauteilpreis erkauft. Unterdruckschalter mit zwei Schaltpunkten (oder alternativ zwei Unterdruckschalter mit unterschiedlichen Schaltpunkten) stellen eine günstigere Variante dar: Der Sollwert der Regelgröße liegt zwischen den beiden Schaltpunkten (Unterdruckwerten) und die Gebläseleistung kann durch gezielte Änderung sicher in den gewünschten Zielbereich gefahren werden. Die Abweichung vom Sollwertbereich ist zwar nicht mehr quantitativ erfassbar, es kann aber durch Regelalgorithmen ein Überschwingen verhindert werden (siehe beispielsweise DE 44 33 181 C2). Die eingestellte Leistung schwankt so im Sollwertbereich zwischen den zwei Schaltpunkten.

Die einfachste und preiswerteste Saugleistungsregelung unter Verwendung eines Unterdruckschalters mit nur einem Schaltpunkt ist dadurch möglich, dass die Leistung permanent um diesen Schaltpunkt herum geregelt wird. Damit wird mit einem einfacheren Unterdruckschalter das Verhalten des Zwei-Punkt-Schalters nachgebildet, allerdings mit einigen Nachteilen. Bei einer Regelung mit hoher Dynamik schwingt die eingestellte Leistung sehr stark, dies führt zu einer ungewollten Geräuschentwicklung, bei der der Benutzer ein Heulen wahrnimmt. Bei geringerer Dynamik ist die Regelung stabiler und schwingt weniger, reagiert aber auf Druckänderungen, beispielsweise beim Wechseln von Bodenbelägen oder beim Anheben der Bodendüse entsprechend langsam, was ebenfalls als störend empfunden wird. Die Automatik wirkt zu träge.

In neueren Staubsaugern ist es deshalb üblich, zur Regelung der Saugleistung zwischen zwei Betriebsbereichen zu unterscheiden, und zwar zwischen einem ersten Bereich, in dem der Arbeitspunkt des Gebläses gesucht wird, und einem zweiten Bereich, in dem die Regeleinrichtung auf einen Betrieb mit geringerer Dynamik umschaltet. Bei dem derzeit verwendeten Verfahren zur Suche des Arbeitspunkts wird die Leistung mit hoher Geschwindigkeit zur Änderung des Unterdruckschalters zunächst in eine Richtung geändert - wenn der Schalter geschlossen ist, wird die Leistung abgesenkt, wenn der Schalter geöffnet ist, wird die Leistung erhöht - nach dem Schaltwechsel des Unterdruckschalters wird die Leistung wieder in die jeweils andere Richtung gestellt, bis erneut ein Schaltwechsel eintritt. Bei dieser Prozedur wird der Leistungswert der beiden Schaltwechsel gespeichert und der Mittelwert aus den beiden Werten gebildet. Dieser Mittelwert wird anschließend als Sollwert angenommen und die entsprechende Leistung eingestellt. Nachteilig an dieser Lösung ist das geräuschvolle Hoch- und Runterfahren der Leistung während der Arbeitspunktsuche, das einem Defekt der Regelung ähnlich klingt.

Der Erfindung stellt sich somit das Problem, ein Verfahren zum Einstellen der Leistung eines Staubsaugergebläses der eingangs genannten Art zu offenbaren, bei dem die Ermittlung des Arbeitspunkts schneller und mit geringerer Geräuschentwicklung möglich ist.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich dadurch, dass die Regeleinrichtung in der ersten Betriebsphase für die Lage des Schaltpunkts des Unterdruckschalters charakteristische Parameter ermittelt und hieraus den Arbeitspunkt des Gebläses bestimmt, und dass die Regeleinrichtung in der zweiten Betriebsphase die Stellgröße derart ändert, dass unverzüglich der Arbeitspunkt des Gebläses angefahren wird. Hierdurch wird sehr schnell ein stabiler Zustand erreicht, in dem die Regeleinrichtung die Regelung mit einer geringeren Dynamik betreiben kann.

Es ist zweckmäßig, wenn die Regeleinrichtung die benötigte Zeit zum Ändern der Stellgröße vom Anfangswert bis zum Schaltwechsel des Unterdruckschalters ermittelt. Zusätzlich kann noch die Regeleinrichtung die Differenz der maximal erreichbaren Gebläseleistung und der beim Schaltwechsel des Unterdruckschalters erreichten Gebläseleistung bzw. die Differenz der entsprechenden Stellgrößen ermitteln.

In einer vorteilhaften Ausführungsform bestimmt die Regeleinrichtung aus den für die Lage des Schaltpunkts des Unterdruckschalters charakteristischen Parametern zunächst einen Zielbereich und nimmt dann den Arbeitspunkt als Mitte des Zielbereichs an.

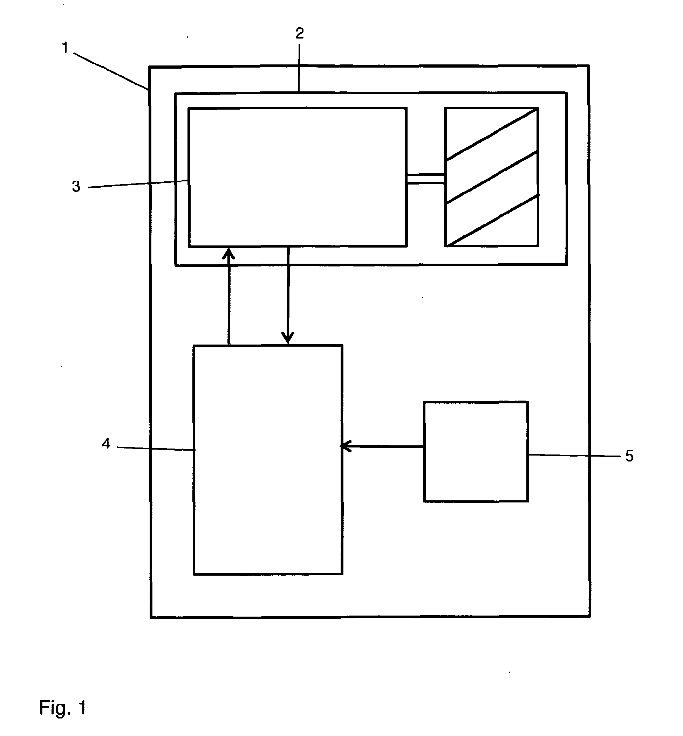

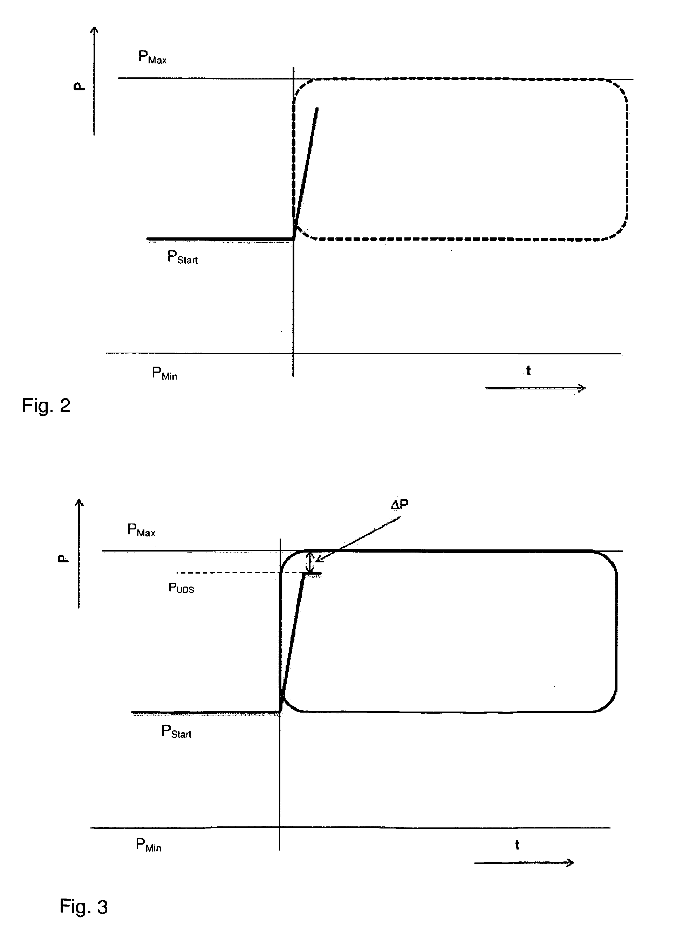

Ein Ausführungsbeispiel der Erfindung wird nachfolgend näher beschrieben. Die Figuren 2 bis 6 zeigen Diagramme, anhand derer der Ablauf der Saugleistungsregelung bei einem Staubsaugergebläse 2 rein schematisch dargestellt ist. Das Gebläse ist Bestandteil eines an sich bekannten Staubsaugers 1, der in der Figur 1 lediglich mit seinen für die Erfindung wesentlichen Teilen als Blockschaltbild skizziert ist. Zur Einstellung der Gebläseleistung ist dem Motor 3 des Gebläses 2 eine elektronische Regeleinrichtung 4 zugeordnet. Diese wirkt beispielsweise dann, wenn ein Universalmotor zum Einsatz kommt, über einen Leistungshalbleiter mittels einer Phasenan- oder -abschnittsteuerung auf die Stromversorgung des Motors ein. In diesem Fall ist der Phasenwinkel die Stellgröße der Regeleinrichtung 4. Als Regelgröße, mit der die Regeleinrichtung 4 arbeitet, dient der vom Gebläse 2 erzeugte Unterdruck. Es wird ein fester Sollwert vorgegeben, indem zur Ermittlung des Istwerts ein Unterdruckschalter 5 verwendet wird, welcher nur einen einzigen Schaltpunkt besitzt, so dass dieser Schaltpunkt dem Sollwert entspricht. Der Schalter 5 kann an einer geeigneten Stelle des Staubsaugers 1 angeordnet sein, beispielsweise im Bereich der Ankopplung eines Saugschlauchs an das Staubsaugergehäuse (beide nicht dargestellt).

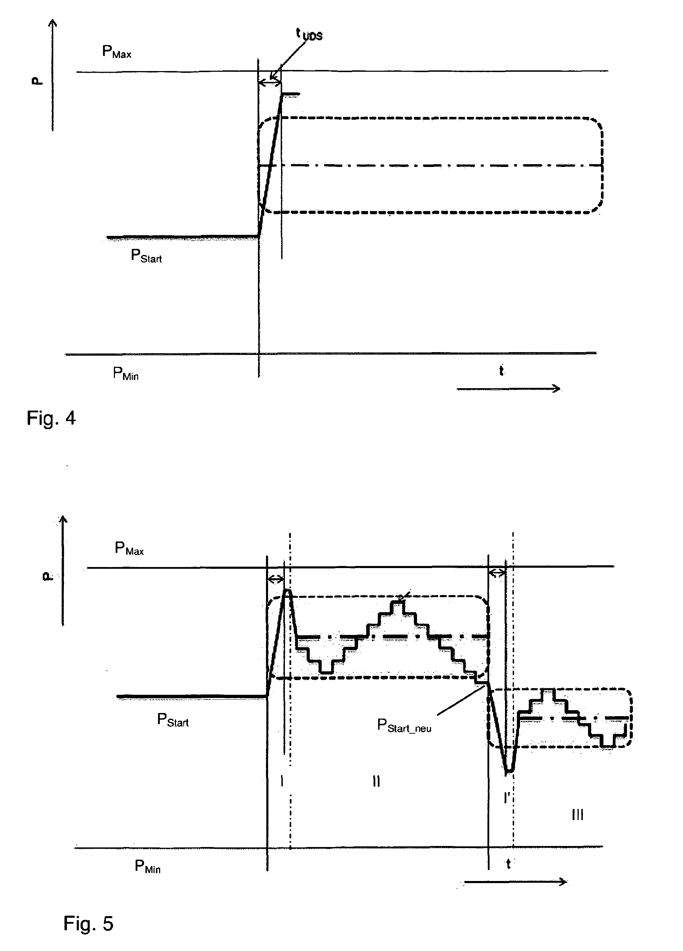

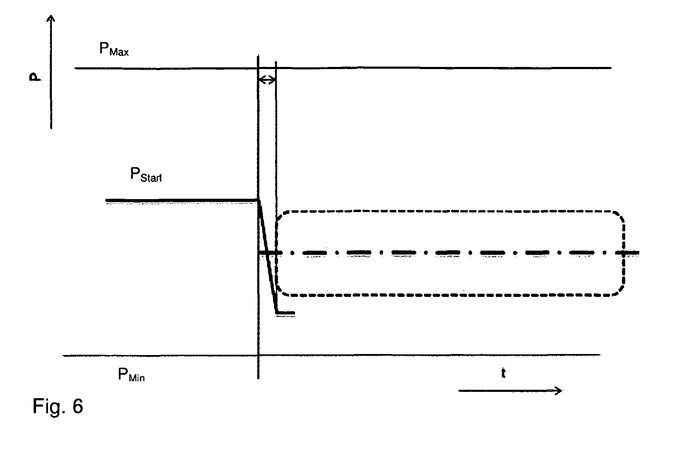

Im Folgenden ist die Arbeitsweise der Regeleinrichtung 4 beschrieben. In den Figuren 2 bis 6 werden Diagramme gezeigt, die die eingestellte Gebläseleistung in Abhängigkeit von der Zeit wiedergeben. Zunächst einmal befindet sich die Gebläseleistung auf einem Anfangswert $P_{Start}$, siehe Figur 2. Hieran schließt sich eine erste Betriebsphase I (siehe Figur 5) an, in der die Regeleinrichtung 4 einen Arbeitspunkt für den Gebläsemotor 3 sucht, in dem der erzeugte Unterdruck im Bereich des Schaltpunkt des Unterdruckschalters 5 liegt. Anfangswert kann eine Leistung $P_{Start}$ sein, die das Gebläse beim Einschalten des Staubsaugers aufgrund einer Voreinstellung oder aber auch aufgrund des gespeicherten, beim letzten Saugvorgang zuletzt erzeugten Werts abgibt. Anfangswert kann aber auch die Leistung $P_{Start\_neu}$ sein, die das Gebläse während des Betriebs kurz vor einer Druckänderung erzeugt (Anm.: Die Druckänderung verursacht eine signifikante Änderung der Istgröße und bedingt dadurch eine erneute Suche des Arbeitspunkts). In dieser ersten Betriebsphase ändert die Regeleinrichtung 4 die Stellgröße und damit die Gebläseleistung mit großer, vorzugsweise maximaler Geschwindigkeit ausgehend vom Anfangswert $P_{Start}$, siehe Figur 2. Die Änderung erfolgt in Abhängigkeit vom Schaltzustand des Unterdruckschalters 5, d. h. bei geöffnetem Unterdruckschalter 5 wird die Stellgröße erhöht, da der gewünschte Unterdruck noch nicht erreicht ist, und bei geschlossenem Unterdruckschalter 5 wird die Stellgröße verringert, da der Unterdruck bereits zu hoch ist. Im Folgenden wird das erfindungsgemäße Verfahren bei einem geöffneten Unterdruckschalter 5 beschrieben, siehe Figuren 2 bis 5, lediglich die Figur 6 zeigt in einer Zusammenfassung die Vorgänge bei geschlossenem Unterdruckschalter 5. Zu Beginn der ersten Betriebsphase kennt die Regeleinrichtung 4 lediglich den Anfangswert $P_{Start}$ und die Leistungsgrenzen des Systems, d. h. einen Maximalwert $P_{Max}$ und einen Minimalwert $P_{Min}$. Der Zielbereich liegt bei geöffnetem Unterdruckschalter zunächst zwischen $P_{Start}$ und $P_{Max}$.

Während des Leistungsanstiegs wird dann der Schaltpunkt des Unterdruckschalters 5 erreicht und der Schalter 5 schließt. Die Regeleinrichtung 4 ermittelt zwei für die Lage des Schaltpunkts charakteristische Parameter, nämlich die Differenz $\Delta P$ zwischen $P_{Max}$ und der Leistung $P_{UDS}$ im Schaltpunkt des Unterdruckschalters und die Zeit $t_{UDS}$, die zum Ändern der Stellgröße vom Anfangswert ($P_{start}$) bis zum Schaltwechsel ($P_{UDS}$) des Unterdruckschalters 5 benötigt wird. Anschließend wird auf Basis dieser Parameter der Zielbereich weiter eingegrenzt. Die Obergrenze, ursprünglich $P_{Max}$, wird zunächst um $\Delta P$ abgesenkt, anschließend wird die Obergrenze um einen weiteren Leistungsbetrag verringert, und zwar um den Wert

$$t_{UDS} \bullet y.$$

Dabei sind

$t_{UDS}$     die Zeit zum Ändern der Stellgröße vom Anfangswert ($P_{start}$) bis zum Schaltwechsel ($P_{UDS}$) des Unterdruckschalters

$y$     eine durch Versuche bestimmbare Konstante mit der Maßeinheit W/sec

Die Untergrenze wird um den Wert

$$x/\Delta P$$

angehoben. Dabei sind

$x$     eine weitere, durch Versuche bestimmbare Konstante mit der Maßeinheit $W^2$

$\Delta P$     die Differenz $\Delta P$ zwischen $P_{Max}$ und der Leistung $P_{UDS}$ im Schaltpunkt des Unterdruckschalters

Auf diese Weise wird der in Figur 4 dargestellte eingegrenzte Zielbereich ermittelt. Anschließend wird der Mittelwert dieses Zielbereichs als Arbeitspunkt des Gebläses angenommen (siehe auch Figur 4) und unverzüglich angefahren (siehe Figur 5). Dann wird die Stellgröße nur noch langsam geändert. Die Stellgröße wird jeweils stufenweise verringert, bis sich der Unterdruckschalter 5 öffnet. Dann wird die Stellgröße wieder erhöht, bis der Unterdruckschalter 5 schließt usw. Die durch die Stellgröße beeinflusste Gebläseleistung schwingt demzufolge mit geringer Frequenz um den Arbeitspunkt herum. Werden während des Saugvorgangs die Arbeitsbedingungen beispielsweise durch Anheben der Düse oder Wechseln des bearbeiteten Untergrunds geändert, ändert sich auch der vom Gebläse erzeugte Unterdruck und damit der Arbeitspunkt. Eine Verschiebung des Arbeitspunktes hat zur Folge, dass ein Öffnen oder Schließen des Unterdruckschalters 5 nicht nach einer vorgegebenen Anzahl von Stellgrößenänderungen (Schritten) geschieht. Die Regeleinrichtung 4 erkennt dies und startet eine neue erste Betriebsphase I'. Im in Figur 5 gezeigten Beispiel ist der Unterdruckschalter 5 geschlossen. Deshalb wird in der Betriebsphase I' die Leistung zunächst einmal schnell verringert. Figur 6 zeigt zusammengefasst die Ermittlung des Arbeitspunkts in einem solchen Fall. Dabei wird die Untergrenze des Zielbereichs von $P_{Min}$ auf den Wert

$$P_{Min} + \Delta P + t_{UDS} \cdot y$$

angehoben. Die Obergrenze des Zielbereichs wird von $P_{Start}$ auf

$$Pstart - x / \Delta P$$

abgesenkt. Anschließend wird der Mittelwert des Zielbereichs berechnet und als neuer Arbeitspunkt angenommen. Danach erfolgt das Umschalten auf die zweite Betriebsphase II', die analog zur zweiten Betriebsphase II durchgeführt wird.

Ein Sonderfall tritt auf, wenn in der ersten Betriebsphase die maximal oder minimal einstellbare Leistung erreicht wird, ohne dass ein Schaltwechsel des Unterdruckschalters 5 erfolgt. Dann liegt der Arbeitspunkt in der Nähe von $P_{Max}$ bzw. $P_{Min}$ und es kann weder ein Zielbereich noch ein Mittelwert errechnet werden. Die Regeleinrichtung 4 nimmt dann als Arbeitspunkt die Ober- bzw. Untergrenze $P_{Max}$ bzw. $P_{Min}$ an und hält die Stellgröße auf dem maximal bzw. minimal einstellbaren Wert. Anschließend wird die zweite Betriebsphase durchgeführt. Es kann zu Beginn der zweiten Betriebsphase nach einer Zeit $t_1$ noch ein Schaltwechsel erfolgen, wenn in der ersten Betriebsphase der Schaltwechsel nur wegen des Überschwingens nicht erreicht wurde. Dann errechnet die Regeleinrichtung 4 einen Arbeitspunkt, der bei

$$P_{Max} - z / t_1$$

bzw. bei

$$P_{Min} + z / t_1$$

liegt. Dabei ist z eine in Versuchen ermittelbare Konstante.

**Patentansprüche**

1. Verfahren zum Einstellen der Leistung eines Staubsaugergebläses (2), bei dem eine elektronische Regeleinrichtung (4) die Gebläseleistung mittels einer geeigneten Stellgröße in Abhängigkeit eines vom Gebläse erzeugten Unterdrucks als Regelgröße einstellt, wobei der Unterdruck mittels eines Unterdruckschalters (5) mit einem einzigen Schaltpunkt ermittelt wird, und wobei die Regeleinrichtung (4) in einer ersten Betriebsphase (I, I') nach dem Einschalten des Gebläses (2) oder nach einer Änderung des Unterdrucks die Stellgröße schnell von einem Anfangswert ($P_{start}$) bis zu einem Schaltwechsel des Unterdruckschalters (4) ändert und in einer zweiten Betriebsphase (II, II') die Stellgröße langsam um den Schaltpunkt herum ändert,
   **dadurch gekennzeichnet,**
   **dass** die Regeleinrichtung (4) in der ersten Betriebsphase (I, I') für die Lage des Schaltpunkts des Unterdruckschalters (5) charakteristische Parameter ermittelt und hieraus den Arbeitspunkt des Gebläses bestimmt, und dass die Regeleinrichtung (4) in der zweiten Betriebsphase (II, II') die Stellgröße derart ändert, dass unverzüglich der Arbeitspunkt des Gebläses angefahren wird.

2. Verfahren nach Anspruch 1,
   **dadurch gekennzeichnet,**
   **dass** die Regeleinrichtung (4) die benötigte Zeit ($t_{UDS}$) zum Ändern der Stellgröße vom Anfangswert ($P_{Start}$) bis zum Schaltwechsel ($P_{UDS}$) des Unterdruckschalters (5) ermittelt.

3. Verfahren nach Anspruch 2,
   **dadurch gekennzeichnet,**
   **dass** die Regeleinrichtung (4) die Differenz ($\Delta P$) zwischen der maximal erreichbaren Gebläseleistung und der beim Schaltwechsel des Unterdruckschalters (5) erreichten Gebläseleistung bzw. die Differenz der entsprechenden Stellgrößen ermittelt.

4. Verfahren nach mindestens einem der Ansprüche 1 bis 3,
   **dadurch gekennzeichnet,**

**dass** die Regeleinrichtung (4) aus den für die Lage des Schaltpunkts des Unterdruckschalters (5) charakteristischen Parametern zunächst einen Zielbereich bestimmt und hieraus den Arbeitspunkt als Mitte des Zielbereichs annimmt.

## Claims

1. Method for adjusting the power of a vacuum cleaner fan (2), in which an electronic control device (4) adjusts the fan power by means of a suitable manipulated variable on the basis of a vacuum generated by the fan as the control variable, the vacuum being determined by means of a vacuum switch (5) having a single switching point, and the control device (4), in a first operating phase (I, I') after the fan (2) is switched on or hollowing a change in the vacuum, quickly changing the manipulated variable from a start value ($P_{start}$) to a switch change of the vacuum switch (4) and, in a second operating phase (II, II'), slowly changing the manipulated variable around the switching point,
**characterised in that**
the control device (4), in the first operating phase (I, I'), detects characteristic parameters for the position of the switching point of the vacuum switch (5) and determines therefrom the operating point of the fan, and **in that** the control device (4), in the second operating phase (II, II'), changes the manipulated variable in such a way that a movement to the operating point of the fan is carried out immediately.

2. Method according to claim 1,
**characterised in that**
the control device (4) detects the time required ($t_{UDS}$) for changing the manipulated variable from the start value ($P_{Start}$) to the switch change ($P_{UDS}$) of the vacuum switch (5).

3. Method according to claim 2,
**characterised in that**
the control device (4) detects the difference ($\Delta P$) between the maximum achievable fan power and the fan power achieved during the switch change of the vacuum switch (5) or the difference between the corresponding manipulated variables.

4. Method according to at least one of claims 1 to 3,
**characterised in that**
the control device (4) first detects a target region from the characteristic parameters for the position of the switching point of the vacuum switch (5) and takes therefrom the operating point as the centre of the target region.

## Revendications

1. Procédé de réglage de la puissance d'un ventilateur d'aspirateur (2), dans lequel un dispositif de régulation (4) électronique règle en tant que grandeur de réglage la puissance du ventilateur au moyen d'une grandeur réglante appropriée en fonction d'une dépression produite par un ventilateur, la dépression étant déterminée au moyen d'un contact à dépression (5) avec un point de commutation unique, et le dispositif de régulation (4) modifiant rapidement, dans une première phase de fonctionnement (I, I') après la mise en service du ventilateur (2) ou après une modification de la dépression, la grandeur réglante en la faisant passer d'une valeur initiale ($P_{start}$) à un changement de commutation du contact à dépression (4) et, dans une deuxième phase de fonctionnement (II, II'), modifiant la grandeur réglante lentement tout autour du point de commutation,
**caractérisé en ce que**
le dispositif de régulation (4) dans la première phase de fonctionnement (I, I'), détermine des paramètres caractéristiques de la position du point de commutation du contact à dépression (5) et définit à partir de cela le point de travail du ventilateur, et **en ce que** le dispositif de régulation (4), dans la deuxième phase de fonctionnement (II, II'), modifie la grandeur réglante de telle sorte qu'un positionnement sur le point de travail du ventilateur est effectué sans retard.

2. Procédé selon la revendication 1,
**caractérisé en ce que**
le dispositif de régulation (4) détermine le temps ($t_{UDS}$) nécessaire pour la modification de la grandeur réglante à partir de la valeur initiale ($P_{Start}$) jusqu'au changement de commutation ($P_{UDS}$) du contact à dépression (5).

3. Procédé selon la revendication 2,
**caractérisé en ce que**
le dispositif de régulation (4) détermine la différence ($\Delta P$) entre la puissance du ventilateur pouvant être atteinte au maximum et la puissance du ventilateur atteinte lors du changement de commutation du contact à dépression (5) ou la différence des grandeurs réglantes correspondantes.

4. Procédé selon une des revendications 1 à 3,
**caractérisé en ce que**
à partir des paramètres caractéristiques de la position du point de commutation du contact à dépression (5), le dispositif de régulation (4) définit d'abord une plage cible et, à partir de là, adopte le point de travail en tant que milieu de la plage cible.

Fig. 1

Fig. 2

Fig. 3

Fig. 4

Fig. 5

Fig. 6

**EP 2 620 086 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4433181 C2